# EUROPEAN PATENT APPLICATION

(11) **EP 4 614 932 A1**
(43) Date of publication of application: **10.09.2025**
(21) Application number: 25162416.9
(22) Date of filing: 07.03.2025
(51) Int. Cl.: H04L 45/02, H04L 45/12, H04L 45/00, H04L 49/118, H04L 49/20, H04L 49/25, H04L 49/00

(54) **DYNAMIC MULTIPATH LOAD BALANCING**

(30) Priority: 07.03.2024 US 202418598326
(71) Applicant: Juniper Networks, Inc., Sunnyvale, CA 94089-1206 (US)
(72) Inventor: KUMAR, Suraj, Sunnyvale, 94089 (US); PALANISAMY, Balaji, Sunnyvale, 94089 (US); PUNJA, Samantha Madhusudan, Sunnyvale, 94089 (US)
(74) Representative: D Young & Co LLP

(57) **Abstract**

In some implementations, a first network device may receive a first message generated by an originating network device that includes a route location identifier attribute associated with an address identifier. The first network device may determine, based on the route location identifier attribute, route information associated with the address identifier.

## Description

### BACKGROUND

Load balancing may refer to an ability of a network device to balance network traffic across multiple links. For example, the network device can transmit network traffic over two or more links rather than over only a single link when more than one link is available. As a result, load balancing may help to prevent the single link from experiencing excessive network traffic.

### SUMMARY

Particular aspects are set out in the appended independent claims. Various optional embodiments are set out in the dependent claims.

In some implementations, a method includes receiving, by a first network device, a first message generated by an originating network device that includes a route location identifier attribute associated with an address identifier; and determining, by the first network device and based on the route location identifier attribute, route information associated with the address identifier.

In some implementations, a computer-readable medium comprising (e.g. storing and/or conveying) a set of instructions includes one or more instructions that, when executed by one or more processors of a first network device, cause the first network device to: receive a first message that includes a route location identifier attribute associated with an address identifier; and determine, based on the route location identifier attribute, route information associated with the address identifier.

In some implementations, a first network device includes one or more memories; and one or more processors to: receive a first message that includes a route location identifier attribute; and determine, based on the route location identifier attribute, route information for an address identifier associated with the route location identifier attribute.

### BRIEF DESCRIPTION OF THE DRAWINGS

Figs. 1A-1F are diagrams of an example implementation associated with dynamic multipath load balancing.
Figs. 2A-2B are diagrams of example implementations described herein.
Fig. 3 is a diagram of an example environment in which systems and/or methods described herein may be implemented.
Fig. 4 is a diagram of example components of a device associated with systems and/or methods described herein.
Fig. 5 is a diagram of example components of a device associated with systems and/or methods described herein.
Fig. 6 is a flowchart of an example process associated with dynamic multipath load balancing.

### DETAILED DESCRIPTION

The following detailed description of example implementations refers to the accompanying drawings. The same reference numbers in different drawings may identify the same or similar elements.

A network device (e.g., a router, a switch, or the like) can forward traffic along a path having multiple next-hops by hashing traffic flows to next-hops (e.g., via local links of the network device) for load balancing purposes. For example, a network device can hash traffic flows into different equal-cost multi-path (ECMP) links to route the traffic flows to a destination. In some cases, ECMP can include dynamic load balancing, where a quality of the local links (e.g., in terms of load, queue size, or the like) that connect the network device to the next-hops is a consideration for making load balancing decisions. However, dynamic load balancing decisions do not take into account quality of remote links (e.g., other links along a route that connect the next-hops to a destination).

This can result in a traffic flow being forwarded, by the network device, along a suboptimal path. For example, traffic flows that ultimately propagate via a same remote path portion can experience flow collisions, which can lead to high latency, low throughput, oversubscription, packet drops, or the like. This congestion can also lead to increased convergence times (e.g., due to remote link failures) and can impact artificial intelligence (AI)/ machine learning (ML) traffic, which may have strict loss and latency requirements. Further, by not taking into account a quality of a full network, utilization of available network resources (e.g., in terms of bandwidth, or another metric) may be suboptimal.

Some implementations described herein enable dynamic multipath load balancing. For example, network devices in a network (e.g., hierarchical network, such as a Clos network with multiple levels) may provide messages to cause local links between network devices to be monitored and for quality of paths via the local links to be shared between the network devices. Accordingly, a network device that is to forward traffic may determine route information associated with an address identifier (e.g., that indicates a destination for the traffic). The route information may include local path quality information (e.g., the indicates a quality of a local path from the network device to another network device via local link that connects the network device and the other network device) and remote path quality information (e.g., that indicates a quality of a remote path from the other network device to a destination via one or more other links that connect the other network device to the destination). In this way, the network device can determine, based on the quality of the local path and the quality of the remote path, an optimal end-to-end path (e.g., a combination of the local path and the remote path, also referred to as a multipath) for forwarding the traffic from the network device to the destination.

In this way, some implementations described herein enable traffic being forwarded, by the network device, along an optimal path. For example, the traffic can be forwarded to minimize a likelihood of collisions, which can reduce latency, increase throughput, minimize oversubscription, minimize packet drops, or the like. This decreases convergence times (e.g., due to remote link failures) and can facilitate AI/ML traffic (that has strict loss and latency requirements). Further, some implementations enable optimal utilization available network resources.

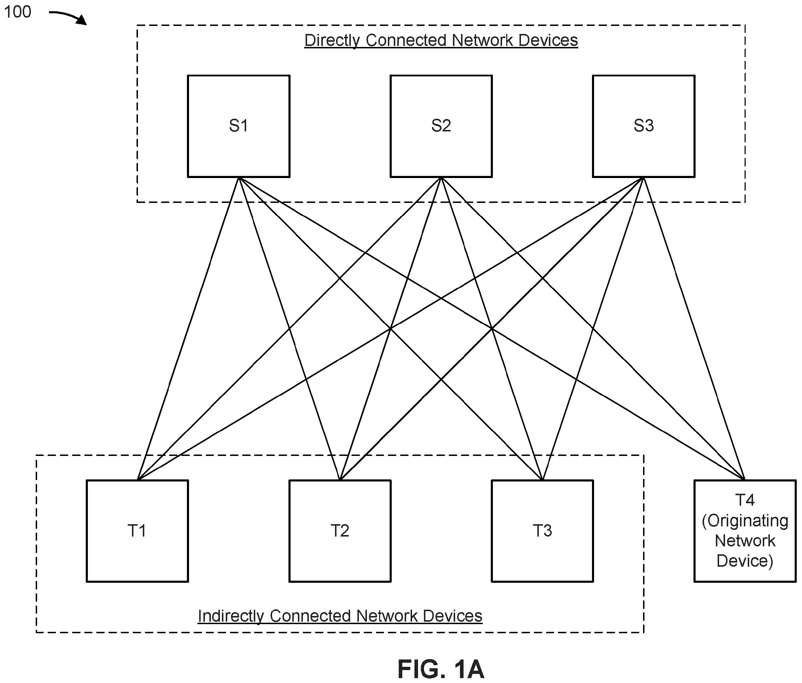

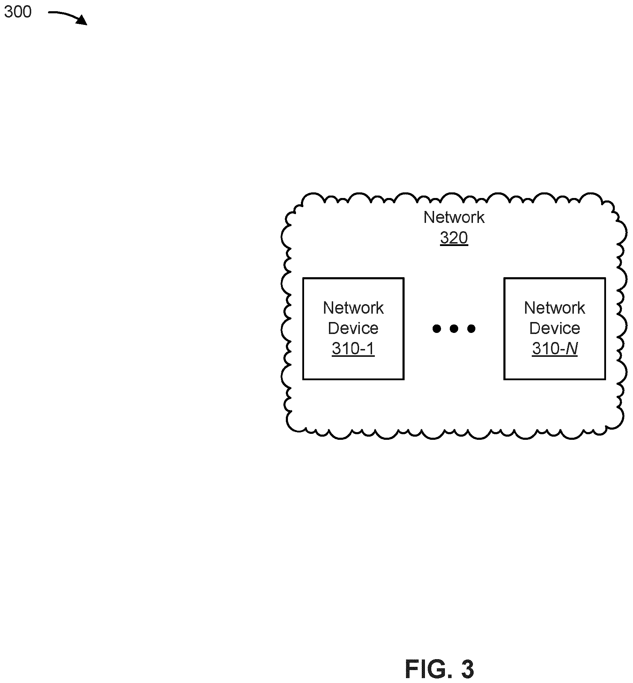

Figs. 1A-1F are diagrams of an example implementation 100 associated with dynamic multipath load balancing. As shown in Figs. 1A-1F, example implementation 100 includes a plurality of network devices (shown as network devices S1-S3 and T1-T4). These devices are described in more detail below in connection with Figs. 3-5.

In some implementations, the plurality of network device mays be included in a network, such as a Clos network. In some implementations, the plurality of network devices may be arranged in a plurality of levels in a Clos network (e.g., that employs a spine-leaf architecture). For example, as shown in Fig. 1A, the plurality of network devices may be arranged in two levels of a three-stage Clos network. One layer includes spine network devices S1-S3 and the other layer includes leaf network devices T1-T4. As shown, each spine network device may communicate with each leaf network device, and each leaf network device may communicate with each spine network device, over respective links. For example, leaf network devices Tl-T4 may forward packets to each other over the links via spine network devices S1-S3. Leaf network devices Tl-T4 and spine network device S1-S3 may be, for example, border gateway protocol (BGP) speakers.

As further shown in Fig. 1A, a particular network device (e.g., leaf network device T4) may be considered to be an "originating" network device (e.g., that generates and sends messages, as further described herein). Accordingly, the plurality of network devices may include one or more network devices (e.g., the spine network devices S1-S3) that are directly connected to the originating network device (e.g., via "local" links that directly connect to the originating network device, respectively), and may include one or more network devices (e.g., the leaf network devices T1-T3) that are indirectly connected to the originating network device (e.g., via other network devices and multiple links).

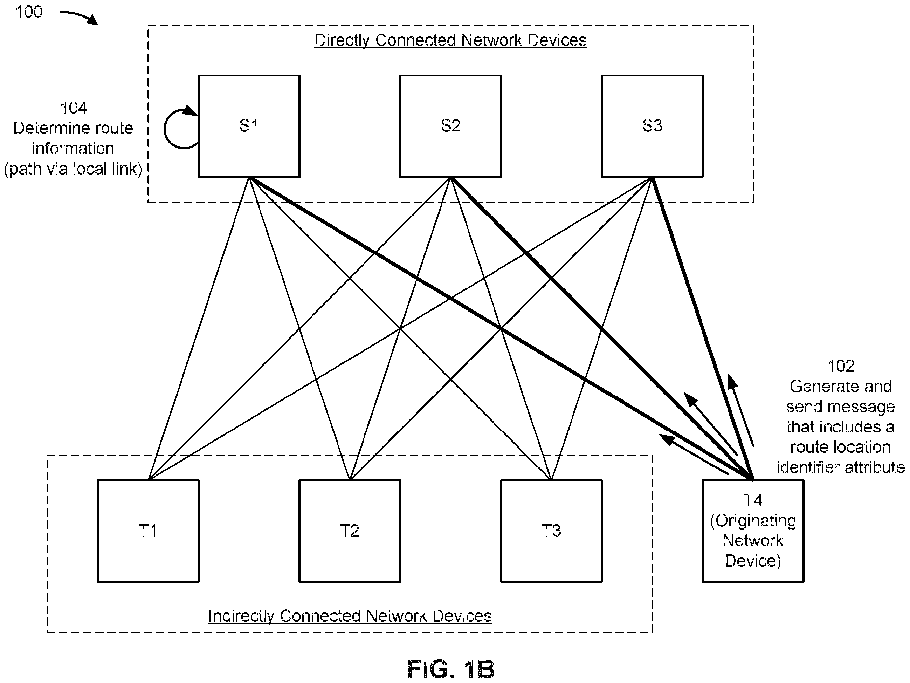

As shown in Fig. 1B, and by reference number 102, the originating network device (e.g., the leaf network device T4) may generate and send a message. For example, the originating network device may generate and send the message to each of the one or more network devices (e.g., the spine network devices S1-S3) that are directly connected to the originating network device via respective local links. Accordingly, each network device, of the one or more directly network devices may receive the message from the originating network device (e.g., via a local link that connects the network device and the originating network device).

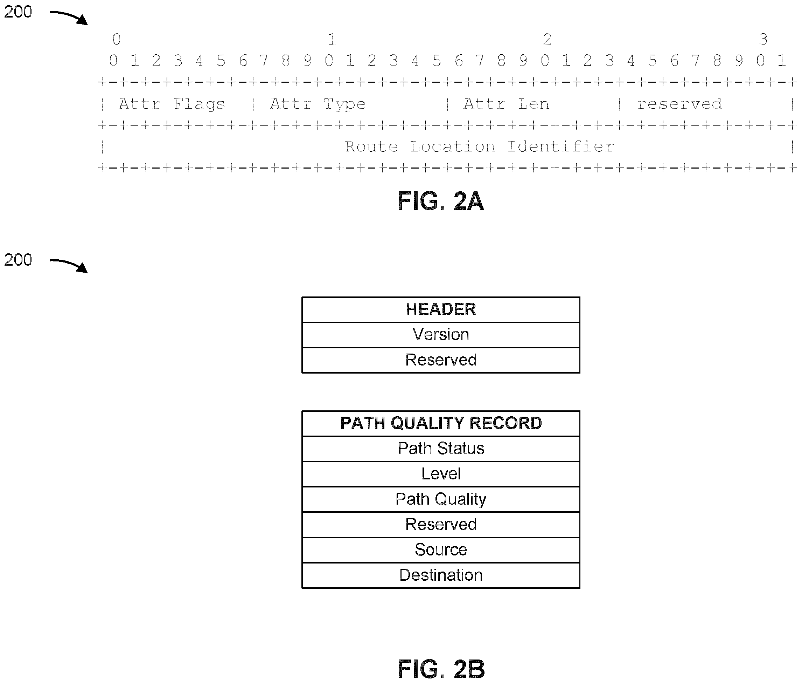

The message may include, for example, an address identifier and a route location identification attribute. The address identifier may indicate one or more Internet protocol (IP) addresses and/or IP address prefixes (e.g., that are destinations for traffic forwarded by the plurality of network devices). The route location identification attribute may identify the originating network device (e.g., may include a universally unique identifier (UUID), a text string, a number string, and/or an alphanumeric string, among other examples, that identifies the originating network device). Further, the route location identification attribute may be associated with the address identifier. For example, by including the route location identification attribute in the message, it may be indicated that the originating network device is a last hop in the network for any traffic that is to be forwarded to the address identifier. In some implementations, the message may be a BGP message (e.g., a BGP update message). An example of the route location identification attribute (e.g., that may be included in a BGP message) is further described herein in relation to Fig. 2A.

As shown by reference number 104, a network device (e.g., a network device that received the message via a local link, shown as the spine network device S1), of the one or more directly connected network devices that received the message from the originating network device, may determine route information (e.g., that is associated with the address identifier). The route information may indicate a path from the network device to the originating network device via the local link (e.g., for traffic destined for the address identifier). For example, the route information may indicate, for the local link (e.g., for an identifier that identifies the local link), a local path (e.g., a one-hop path) from the network device to the originating network device. In some implementations, the network device may determine the route information based on the route location identifier attribute (e.g., that identifies the originating network device). For example, the network device may determine, based on identifying that the route location identifier attribute is included in the message, that route information is to be generated and/or updated to associate the local link with the route location identifier attribute. The network device may store the route information in a data structure (e.g., a table, a database, or another type of data structure).

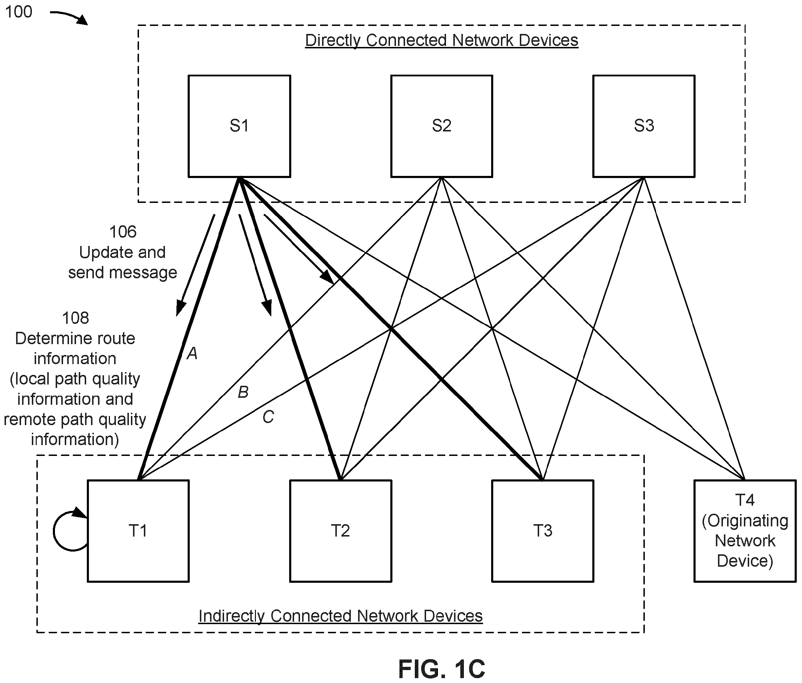

As shown in Fig. 1C, and by reference number 106, the network device (e.g., the spine network device S1) may update and send the message (e.g., that was originated by the originating network device). For example, the network device may update a path number attribute of the message (e.g., increment the path number attribute, such as to indicate that an additional network device updated the message prior to sending the message). Further, the network device may send the message to the one or more network devices (e.g., the leaf network devices T1-T3), other than the originating network device, that are directly connected to the network device via respective local links. Accordingly, each network device, of the one or more indirectly network devices (as shown in Fig. 1C) may receive the message from the network device (e.g., via a local link).

As shown by reference number 108, a network device (e.g., a network device, shown as the leaf network device T1, that received the message via a local link), of the one or more indirectly connected network devices that received the message (e.g., from the spine network device S1), may determine route information (e.g., that is associated with the address identifier). The route information may indicate local path quality information and remote path quality information associated with a path from the network device to the originating network device (e.g., a path from the leaf network device T1 to the originating network device, such as for traffic destined for the address identifier). The local path quality information may indicate, for example, a quality (e.g., in terms of bandwidth, latency, or another type of quality metric) of a local path from the network device (e.g. the leaf network device T1) to an intermediate network device, such as the network device (e.g., the spine network device S1) that sent the message to the network device (e.g., via a local link that connects the network device and the intermediate network device). The remote path quality information (also referred to as a path quality profile (PQP)) may indicate a quality (e.g., in terms of bandwidth, latency, or another type of quality metric) of a remote path from the intermediate network device to the originating network device (e.g., via one or more other links that connect the intermediate network device to the originating network device, such as a local link between the intermediate network device and the originating network device). In some implementations, the remote path quality information may indicate an initial value (e.g., a default remote path quality), which may be subsequently updated by the network device as further described herein.

In some implementations, the network device may determine the route information based on the route location identifier attribute (e.g., that identifies the originating network device) that is included in the message (e.g., that was received by the network device from the intermediate network device). For example, the network device may identify, based on receiving the message from the intermediate network device via a local link that connects the network device and the intermediate network device, the local link. Accordingly, the network device may determine, based on the local link and the route location identifier attribute, local path quality information (e.g., that indicates a quality of a local path to the intermediate network device via the local link) and the remote path quality information (e.g., that indicates a quality of a remote path to the originating network device from the intermediate network device) that is associated with a path from the network device to the originating network device (e.g., via the local link, and thereby via the intermediate network device).

In some implementations, the network device may store the route information in one or more data structures (e.g., one or more tables, one or more databases, one or more or other types of data structures). For example, the network device may store the local path quality information and the remote path quality information in respective data structures.

As a specific example, when the network device (e.g., the leaf network device T1) receives the message from the intermediate network device (e.g., the spine network device S1) via a local link A shown in Fig. 1C, the network device may determine route information associated with the address identifier included in the message. That is, the network device may determine local path quality information and the remote path quality information, and may store the local path quality information in a first data structure and the remote path quality information in a second data structure. The first data structure may store the local path quality information in association with the local link A. For example, the first data structure may include an entry like the following:

| **LOCAL LINK ID** | **LOCAL PATH QUALITY** |
|---|---|
| *A* | Quality (T1-S1) |

The second data structure may store the remote path quality information in association with the route location identifier attribute (e.g., that identifies the originating network device) and the local link A. For example, the second data structure may include an entry like the following:

| **ROUTE LOCATION IDENTIFIER ATTRIBUTE** | **LOCAL LINK ID** | **REMOTE PATH QUALITY** |
|---|---|---|
| T4 | *A* | Initial value |

While Figs. 1A-1C, show operations of an originating network device, an intermediate network device (e.g., the spine network device S1), and a network device (e.g., the leaf network device T1) with respect to a single message that originated from the originating network device, other network devices of the plurality of network devices are receiving, updating, and sending messages and/or determining route information in a similar manner as that described herein. Accordingly, a network device (e.g., the leaf network device T1), of the one or more indirectly connected network devices, may receive respective messages from each network device of the one or more directly connected network devices, such as via local links *A, B,* and *C* shown in Fig. 1C. The network device may therefore determine and store respective route information in association with each local link. In this way, the network device may store local path quality information in association with each local link, and therefore the first data structure may include entries like the following:

| **LOCAL LINK ID** | **LOCAL PATH QUALITY** |
|---|---|
| *A* | Quality (T1-S1) |
| *B* | Quality (T1-S2) |
| *C* | Quality (T1-S3) |

Moreover, the network device may store respective remote path quality information in association with the route location identifier attribute (e.g., that identifies the originating network device) and each local link, and therefore the second data structure may include entries like the following:

| **ROUTE LOCATION IDENTIFIER ATTRIBUTE** | **LOCAL LINK ID** | **REMOTE PATH QUALITY** |
|---|---|---|
| T4 | *A* | Initial value |
| T4 | *B* | Initial value |
| T4 | C | Initial value |

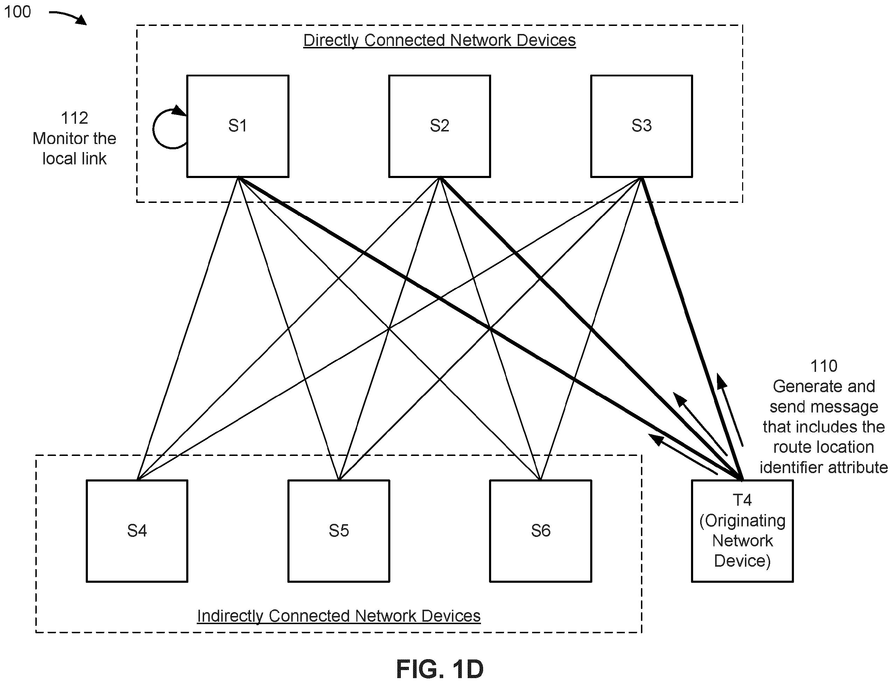

As shown in Fig. 1D, and by reference number 110, the originating network device (e.g., the leaf network device T4) may generate and send a message (e.g., an additional message, after sending the message described herein in relation to Fig. 1A). For example, the originating network device may send the message to each of the one or more network devices (e.g., the spine network devices S1-S3) that are directly connected to the originating network device via respective local links. Accordingly, each network device, of the one or more directly connected network devices may receive the message from the originating network device (e.g., via respective local links).

The message may be similar to the message previously generated and sent by the originating network device (e.g., as described herein in relation to Fig. 1A). For example, the message may include the address identifier and the route location identification attribute (e.g., that identifies the originating network device). In some implementations, the message may be a BGP message (e.g., a BGP update message). The originating network device may send the message to cause each recipient network device to monitor a local link, as described herein.

Accordingly, as shown by reference number 112, a network device (e.g., the spine network device S1), of the one or more directly connected network devices, may monitor a local link upon which the network device received the message from the originating network device. That is, receiving the message may cause the network device to initiate (or to continue) monitoring the local link. For example, the network device may monitor a quality of the local link, such as in terms of a bandwidth (e.g., a used bandwidth and/or an available bandwidth) of the local link, a latency of the local link, or another type of quality metric associated with the local link.

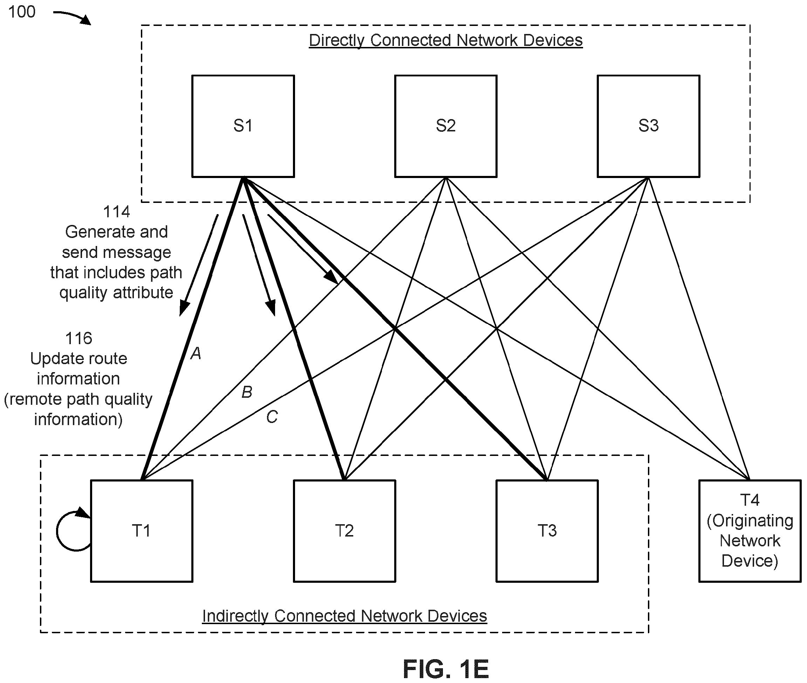

As shown in Fig. 1E, and by reference number 114, the network device (e.g., the spine network device S1) may generate and send a message (e.g., a message that is different than the messages described herein in relation to Figs. 1A-1D). For example, the network device may generate and send the message to each of the one or more network devices (e.g., the leaf network devices T1-T3), other than the originating network device, that are directly connected to the network device via respective local links. Accordingly, each network device, of the one or more indirectly network devices (e.g., the leaf network devices T1-T3, as shown in Fig. 1E) may receive the message (e.g., via a local link) from the network device (e.g., the spine network device S1).

The message may include, for example, a path quality attribute associated with a local link (e.g., that the network device is monitoring, as described herein in relation to Fig. 1D and reference number 112). The path quality attribute may indicate, for example, a status (e.g., an "up" status or a "down" status) of a path from the network device (e.g., the spine network device S1) to the originating network device (e.g., via the local link between the network device and the originating network device), a level of the network device (e.g., when the plurality of network device are arranged in a Clos network), a quality of the path from the network device to the originating network device (e.g., via the local link between the network device and the originating network device), a source identifier (e.g., a UUID, a text string, a number string, and/or an alphanumeric string, among other examples, that identifies the network device), and a destination identifier (e.g., that includes the route location identification attribute or another identifier that identifies the originating network device). In some implementations, the message may be a path quality message (PQM), which is further described herein in relation to Fig. 2B.

In some implementations, the network device may generate and send the message based on monitoring the local link between the network device and the originating network device. For example, based on monitoring the local link, the network device may determine the status of the path from the network device to the originating network device (e.g., via the local link) and/or the quality of the path, and may generate the message to include the status of the path and/or the quality of the path when one or more criteria are met (e.g., when the quality of the path changes by more than a threshold amount, or when a particular amount of time has elapsed since the network device received any message from the originating network device, among other examples).

As shown by reference number 116, a network device (e.g., a network device, shown as the leaf network device T1, that received the message via a local link from an intermediate network device, shown as the spine network device S1), of the one or more indirectly connected network devices that receive the message (e.g., from the spine network device S1), may update the route information (e.g., that is associated with the address identifier) that the network device previously determined (e.g., as described herein in relation to Fig. 1C and reference number 108). For example, the network device may update the remote path quality information indicated by the route information, such as to cause the remote path quality information to indicate at least one of a status of a path (e.g., from the intermediate network device to the originating network device) or a quality of the path that is included in the message.

As a specific example, when the network device (e.g., the leaf network device T1) receives a message from the intermediate network device (e.g., the spine network device S1) via a local link A shown in Fig. 1E, the network device may update the remote path quality information associated with the route location identifier attribute (e.g., that identifies the originating network device) and the local link A to include the quality of the path indicted by the message (e.g., that indicates a quality of a path from the spine network device S1 to the originating network device (the leaf network device T4)). Accordingly, the second data structure may be updated to include an entry like the following:

| **ROUTE LOCATION IDENTIFIER ATTRIBUTE** | **LOCAL LINK ID** | **REMOTE PATH QUALITY** |
|---|---|---|
| T4 | *A* | Quality (S1-T4) |

While Figs. 1D-1E, show operations of an originating network device (e.g., the leaf network device T4), an intermediate network device (e.g., the spine network device S1), and a network device (e.g., the leaf network device T1) with respect to single messages that respectively originated from the originating network device and the intermediate network device, other network devices of the plurality of network devices are generate, receiving, updating, and sending messages and/or updating route information in a similar manner as that described herein. Accordingly, a network device (e.g., the leaf network device T1), of the one or more indirectly connected network devices, may receive respective messages from each network device of the one or more directly connected network devices, such as via local links *A, B,* and C shown in Fig. 1E. The network device may therefore update respective route information in association with each local link. In this way, the network device may update respective remote path quality information in association with the route location identifier attribute (e.g., that identifies the originating network device) and each local link, and therefore the second data structure may include entries like the following:

| **ROUTE LOCATION IDENTIFIER ATTRIBUTE** | **LOCAL LINK ID** | **REMOTE PATH QUALITY** |
|---|---|---|
| T4 | *A* | Quality (S1-T4) |
| T4 | *B* | Quality (S2-T4) |
| T4 | C | Quality (S3-T4) |

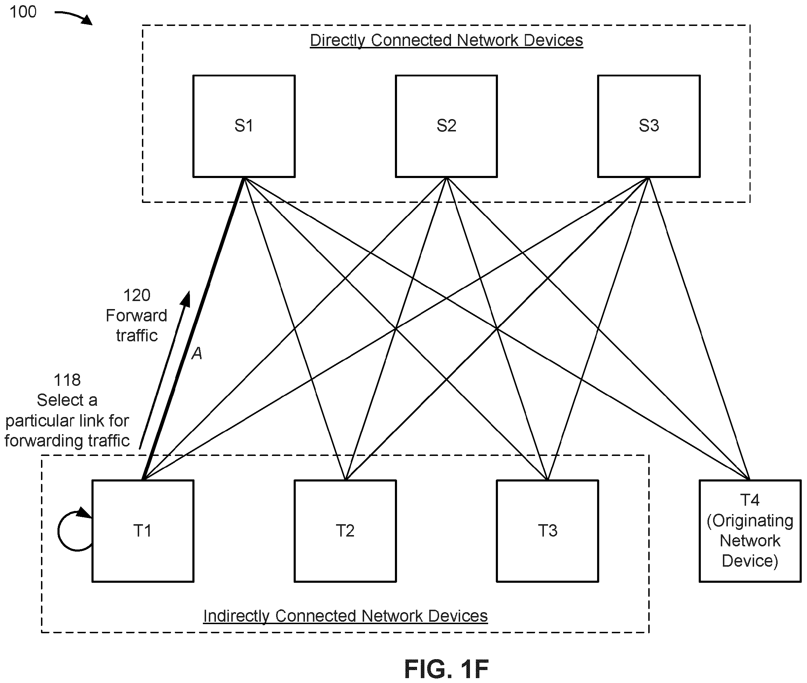

As shown in Fig. 1F, and by reference number 118, a network device (e.g., the leaf network device T1), of the one or more indirectly connected network devices, may select a particular local link, of a plurality of local links that connect the network device to other network devices, for forwarding traffic. The traffic may be associated with the address identifier (e.g., the traffic is destined for the address identifier). That is, the traffic is to be forwarded to the originating network device (e.g., as a last hop in the network) to enable forwarding to the address identifier.

Accordingly, the network device (e.g., based on receiving the traffic) may identify local path quality information (e.g., that is stored in the first data structure) and remote path quality information (e.g., that is stored in the second data structure) that are associated with one or more paths from the network device to the originating network device (e.g., via a plurality of local links that connect the network device to other network devices). The network device may thereby select a particular local link for forwarding the traffic. The particular local link may enable forwarding of the traffic via an optimal end-to-end path (e.g., a combination of a local path and a remote path) from the network device to the originating network device.

In some implementations, the network device (e.g., using a path selection technique, such as an ECMP path selection technique) may process local path quality information (e.g., from the first data structure) associated with each local link and remote path quality information (e.g., from the second data structure) that is associated with each local link and the originating network device to identify a plurality of paths from the network device to the originating network device. The network device then may select a particular local link that provides an optimal end-to-end path (e.g., in terms of a local path quality and a remote path quality) from the network device to the originating network device.

As shown by reference number 120, the network device (e.g., the leaf network device T1) may forward the traffic. For example, the network device may forward the traffic via the particular local link, such as the local link A shown in Fig. 1F. In this way, the network device forwards the traffic to enable the traffic to propagate via the optimal end-to-end path. This may improve a performance of the plurality of network devices and/or an efficiency of the plurality of network devices.

While some implementations described herein are related to a three-stage Clos network, additional implementations include any hierarchical network with multiple levels, such as a five-stage Clos network, a seven-stage Clos network, or another type of Clos network. Accordingly, an originating network device (e.g., an originating leaf network device) of the network may generate and send a message, in a same or similar manner as that described herein in relation to Fig. 1B and reference number 102. A directly connected network device (e.g., a spine network device that is directly connected to the originating leaf network device) of the network that receives the message may determine route information and may update and send the message, in a same or similar manner as that described herein in relation to Fig. 1B and reference number 104 and Fig. 1C and reference number 106.

An indirectly connected network device (e.g., another spine network device) of the network then may receive the message and may determine route information, in a same or similar manner as that described herein in relation to Fig. 1C and reference number 108. The route information may indicate local path quality information and remote path quality information associated with a path from the indirectly connected network device to the originating network device (e.g., as described herein in relation to Fig. 1C and reference number 108). The indirectly connected network device then may update and send the message, in a same or similar manner as that described herein in relation Fig. 1C and reference number 106. In this way, one or more intermediate indirectly connected network device (e.g., one or more indirectly connected spine network devices) in different levels of the network, may receive the message, determine route information, and update and send the message to other indirectly connected network devices. Ultimately, in some implementations, a last indirectly connected network (e.g., an indirectly connected leaf network device) may receive the message and may determine route information, in a same or similar manner as that described herein in relation to Fig. 1C and reference number 108. Notably, the last indirectly connected network device may not update and send the message (e.g., because the last indirectly connected network device is a leaf network device).

Further, the originating network device (e.g., the originating leaf network device) of the network may generate and send a message (e.g., an additional message), in a same or similar manner as that described herein in relation to Fig. 1D and reference number 110. The directly connected network device (e.g., the spine network device that is directly connected to the originating network device) of the network that receives the message may monitor a local link upon which the directly connected network device received the message from the originating network device, in a same or similar manner as that described herein in relation to Fig. 1D and reference number 112. Accordingly, the directly connected network device may generate and send, based on monitoring the local link, a message (e.g., that include a path quality attribute), in a same or similar manner as that described herein in relation to Fig. 1D and reference number 112.

An indirectly connected network device (e.g., another spine network device) of the network then may receive the message (e.g., that includes the path quality attribute) and may update route information (e.g. update remote path quality information that is indicated by the route information), in a same or similar manner as that described herein in relation to Fig. 1C and reference number 116. The indirectly connected network device then may update the message, such as by updating the path quality attribute based on the updated route information. For example, the indirectly connected network device may update the path quality attribute to indicate the remote path quality information (e.g., that was updated by the indirectly connected network device). In this way, the path quality attribute of the message may indicate a remote path quality from the indirectly connected network device to the originating network device.

The indirectly connected network device then may send the message, in a same or similar manner as that described herein in relation Fig. 1E and reference number 114. In this way, one or more intermediate indirectly connected network device (e.g., one or more indirectly connected spine network devices) in different levels of the network, may receive the message, update route information, and update and send the message (e.g., where the path quality attribute indicates the remote path quality information of the updated route information) to other indirectly connected network devices. Ultimately, in some implementations, the last indirectly connected network (e.g., an indirectly connected leaf network device) may receive the message and may update route information, in a same or similar manner as that described herein in relation to Fig. 1E and reference number 116. Notably, the last indirectly connected network device may not update and send the message (e.g., because the last indirectly connected network device is a leaf network device). The last indirectly connected network device then may select a particular link for forwarding traffic and may forward traffic, in a same or similar manner as that described herein in relation to Fig. 1F and reference numbers 118 and 120.

As indicated above, Figs. 1A-1E are provided as an example. Other examples may differ from what is described with regard to Figs. 1A-1E. The number and arrangement of devices shown in Figs. 1A-1E are provided as an example. In practice, there may be additional devices, fewer devices, different devices, or differently arranged devices than those shown in Figs. 1A-1E. Furthermore, two or more devices shown in Figs. 1A-1E may be implemented within a single device, or a single device shown in Figs. 1A-1E may be implemented as multiple, distributed devices. Additionally, or alternatively, a set of devices (e.g., one or more devices) shown in Figs. 1A-1E may perform one or more functions described as being performed by another set of devices shown in Figs. 1A-1E.

Figs. 2A-2B are diagrams of example implementations 200 described herein. Fig. 2A shows an example of a route location identification attribute that may be included in a message (e.g., a BGP message, such as a BGP update message) that is generated by an originating network device (e.g., the leaf network device T4 shown in Figs. 1A-1E). Fig. 2B shows an example of a PQM that may be generated by an intermediate network device (e.g., the spine network device S1 shown in Figs. 1A-1E).

As shown in Fig. 2A, the route location identification attribute may include an attribute flag ("Attr Flags") field, which may be a BGP path-attribute flag that can indicate an Optional Transitive attribute (e.g., based on an "optional" bit being set and a "transitive" bit being set). Accordingly, when a network device receives a message with the route location identification attribute and the BGP path-attribute flag can indicates an Optional Transitive attribute, the receiving network device (e.g., when configured to support the route location identification attribute) may perform one or more operations with respect to the message, as described herein in relation to Figs. 1A-1E. Additionally, or alternatively, as further shown in Fig. 2A, the route location identification attribute may include an attribute type ("Attr Type") field, which may indicate an Internet assigned numbers authority (IANA) type, or another type, of the route location identification attribute; and/or an attribute length ("Attr Len") field, which may indicate a length of the route location identification attribute (e.g., in bytes). The route location identification attribute may include a route location identifier ("Route Location Identifier") field, which may identify the originating network device (e.g., may include a UUID, a text string, a number string, and/or an alphanumeric string, among other examples, that identifies the originating network device). The route location identification attribute may be, for example, a 32-bit identifier.

As shown in Fig. 2B, the PQM may include a header that comprises a version field, which may identify a version of the PQM, and/or a reserved field, which may be reserved to indicate a future functionality of the PQM. The PQM may also include a path quality record that comprises a path status field, which may indicate a status (e.g., an "up" status or a "down" status) of a path from the intermediate network device (e.g., the spine network device S1) to the originating network device (e.g., via a local link between the intermediate network device and the originating network device); a level field, which may indicate a level of the intermediate network device, such when included in a Clos network (e.g., the level may be zero (0) when the intermediate network device is a leaf network device, the level may be one (1) when the intermediate network device is a spine network device, the level may be two (2) when the intermediate network device is a super-spine network device, and so on); a path quality field, which may indicate a quality of the path from the intermediate network device to the originating network device (e.g., via the local link between the network device and the originating network device), such as in terms of a bandwidth (e.g., a used bandwidth and/or an available bandwidth, such as in 1 gigabyte increments) of the local link, a latency of the local link, or another type of quality metric associated with the local link; a reserved field, which may be reserved to indicate additional information; a source field, which may include a source identifier (e.g., a UUID, a text string, a number string, and/or an alphanumeric string, among other examples) that identifies the intermediate network device; and/or a destination field, which may include a destination identifier that includes the route location identification attribute or another identifier that identifies the originating network device.

As indicated above, Figs. 2A-2B are provided as an example. Other examples may differ from what is described with regard to Figs. 2A-2B.

Fig. 3 is a diagram of an example environment 300 in which systems and/or methods described herein may be implemented. As shown in Fig. 3, environment 300 may include a group of network devices 310 (shown as network device 310-1 through network device 310*-N*) and a network 320. Devices of environment 300 may interconnect via wired connections, wireless connections, or a combination of wired and wireless connections.

Network device 310 includes one or more devices capable of receiving, processing, storing, routing, and/or providing messages and/or traffic in a manner described herein. For example, network device 310 may include a router, such as a label switching router (LSR), a label edge router (LER), an ingress router, an egress router, a provider router (e.g., a provider edge router or a provider core router), a virtual router, or another type of router. Additionally, or alternatively, network device 310 may include a gateway, a switch, a firewall, a hub, a bridge, a reverse proxy, a server (e.g., a proxy server, a cloud server, or a data center server), a load balancer, and/or a similar device. Network device 310 may be a provider edge (PE) network device, an autonomous system border router (ASBR) network device, or another type of network device associated with one or more ASs. Network device 310 may be a spine network device, a leaf network device, or another type of network device associated with a Clos network. Network device 310 may be a BGP network device. In some implementations, network device 310 may be a physical device implemented within a housing, such as a chassis. In some implementations, network device 310 may be a virtual device implemented by one or more computer devices of a cloud computing environment or a data center.

Network 320 includes one or more wired and/or wireless networks. For example, network 320 may include a packet switched network, a cellular network (e.g., a fifth generation (5G) network, a fourth generation (4G) network, such as a long-term evolution (LTE) network, a third generation (3G) network, a code division multiple access (CDMA) network, a public land mobile network (PLMN)), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks. Network 320 may be, or may be associated with, a Clos network.

The number and arrangement of devices and networks shown in Fig. 3 are provided as an example. In practice, there may be additional devices and/or networks, fewer devices and/or networks, different devices and/or networks, or differently arranged devices and/or networks than those shown in Fig. 3. Furthermore, two or more devices shown in Fig. 3 may be implemented within a single device, or a single device shown in Fig. 3 may be implemented as multiple, distributed devices. Additionally, or alternatively, a set of devices (e.g., one or more devices) of environment 300 may perform one or more functions described as being performed by another set of devices of environment 300.

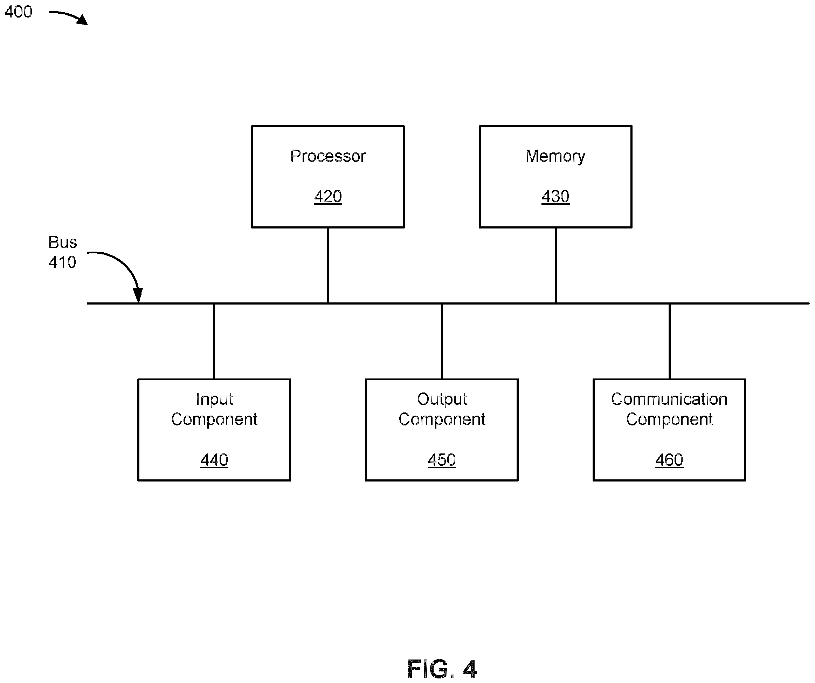

Fig. 4 is a diagram of example components of a device 400 associated with systems and/or methods described herein. The device 400 may correspond to network device 310. In some implementations, network device 310 may include one or more devices 400 and/or one or more components of the device 400. As shown in Fig. 4, the device 400 may include a bus 410, a processor 420, a memory 430, an input component 440, an output component 450, and/or a communication component 460.

The bus 410 may include one or more components that enable wired and/or wireless communication among the components of the device 400. The bus 410 may couple together two or more components of Fig. 4, such as via operative coupling, communicative coupling, electronic coupling, and/or electric coupling. For example, the bus 410 may include an electrical connection (e.g., a wire, a trace, and/or a lead) and/or a wireless bus. The processor 420 may include a central processing unit, a graphics processing unit, a microprocessor, a controller, a microcontroller, a digital signal processor, a field-programmable gate array, an application-specific integrated circuit, and/or another type of processing component. The processor 420 may be implemented in hardware, firmware, or a combination of hardware and software. In some implementations, the processor 420 may include one or more processors capable of being programmed to perform one or more operations or processes described elsewhere herein.

The memory 430 may include volatile and/or nonvolatile memory. For example, the memory 430 may include random access memory (RAM), read only memory (ROM), a hard disk drive, and/or another type of memory (e.g., a flash memory, a magnetic memory, and/or an optical memory). The memory 430 may include internal memory (e.g., RAM, ROM, or a hard disk drive) and/or removable memory (e.g., removable via a universal serial bus connection). The memory 430 may be a non-transitory computer-readable medium. The memory 430 may store information, one or more instructions, and/or software (e.g., one or more software applications) related to the operation of the device 400. In some implementations, the memory 430 may include one or more memories that are coupled (e.g., communicatively coupled) to one or more processors (e.g., processor 420), such as via the bus 410. Communicative coupling between a processor 420 and a memory 430 may enable the processor 420 to read and/or process information stored in the memory 430 and/or to store information in the memory 430.

The input component 440 may enable the device 400 to receive input, such as user input and/or sensed input. For example, the input component 440 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 450 may enable the device 400 to provide output, such as via a display, a speaker, and/or a light-emitting diode. The communication component 460 may enable the device 400 to communicate with other devices via a wired connection and/or a wireless connection. For example, the communication component 460 may include a receiver, a transmitter, a transceiver, a modem, a network interface card, and/or an antenna.

The device 400 may perform one or more operations or processes described herein. For example, a computer-readable medium may provide a set of instructions (e.g., one or more instructions or code) for execution by the processor 420. To provide instructions, the computer-readable medium may store such instructions and/or convey such instructions for the processor. A computer-readable medium may therefore be provided as a computer-readable storage medium and/or a computer readable transmission medium. A computer readable storage medium, such as memory 430, may be a memory device. A memory device includes memory space within a single physical storage device or memory space spread across multiple physical storage devices, and may be referred to as a non-transitory computer-readable medium. Examples of a computer-readable storage medium may include a CD, a DVD, a storage device, a diskette, a tape, flash memory, physical memory, or any other computer-readable storage medium. As noted above, a computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

The processor 420 may execute the set of instructions to perform one or more operations or processes described herein. In some implementations, execution of the set of instructions, by one or more processors 420, causes the one or more processors 420 and/or the device 400 to perform one or more operations or processes described herein. In some implementations, hardwired circuitry may be used instead of or in combination with the instructions to perform one or more operations or processes described herein. Additionally, or alternatively, the processor 420 may be configured to perform one or more operations or processes described herein. Thus, implementations described herein are not limited to any specific combination of hardware circuitry and software.

The number and arrangement of components shown in Fig. 4 are provided as an example. The device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

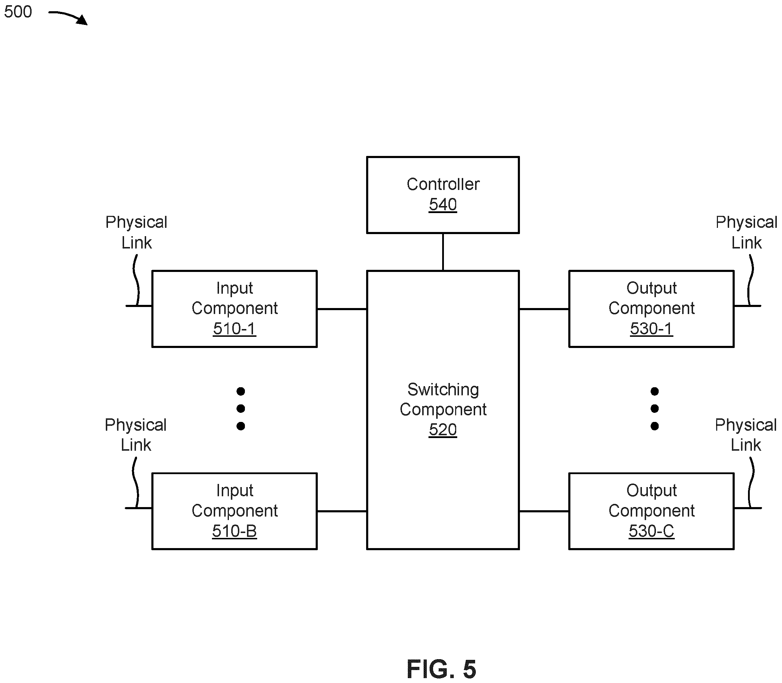

Fig. 5 is a diagram of example components of a device 500 associated with systems and/or methods described herein. Device 500 may correspond to network device 310. In some implementations, network device 310 may include one or more devices 500 and/or one or more components of device 500. As shown in Fig. 5, device 500 may include one or more input components 510-1 through 510-B (B ≥ 1) (hereinafter referred to collectively as input components 510, and individually as input component 510), a switching component 520, one or more output components 530-1 through 530-C (C ≥ 1) (hereinafter referred to collectively as output components 530, and individually as output component 530), and a controller 540.

Input component 510 may be one or more points of attachment for physical links and may be one or more points of entry for incoming traffic, such as packets. Input component 510 may process incoming traffic, such as by performing data link layer encapsulation or decapsulation. In some implementations, input component 510 may transmit and/or receive packets. In some implementations, input component 510 may include an input line card that includes one or more packet processing components (e.g., in the form of integrated circuits), such as one or more interface cards (IFCs), packet forwarding components, line card controller components, input ports, processors, memories, and/or input queues. In some implementations, device 500 may include one or more input components 510.

Switching component 520 may interconnect input components 510 with output components 530. In some implementations, switching component 520 may be implemented via one or more crossbars, via busses, and/or with shared memories. The shared memories may act as temporary buffers to store packets from input components 510 before the packets are eventually scheduled for delivery to output components 530. In some implementations, switching component 520 may enable input components 510, output components 530, and/or controller 540 to communicate with one another.

Output component 530 may store packets and may schedule packets for transmission on output physical links. Output component 530 may support data link layer encapsulation or decapsulation, and/or a variety of higher-level protocols. In some implementations, output component 530 may transmit packets and/or receive packets. In some implementations, output component 530 may include an output line card that includes one or more packet processing components (e.g., in the form of integrated circuits), such as one or more IFCs, packet forwarding components, line card controller components, output ports, processors, memories, and/or output queues. In some implementations, device 500 may include one or more output components 530. In some implementations, input component 510 and output component 530 may be implemented by the same set of components (e.g., and input/output component may be a combination of input component 510 and output component 530).

Controller 540 includes a processor in the form of, for example, a CPU, a graphics processing unit (GPU), an accelerated processing unit (APU), a microprocessor, a microcontroller, a digital signal processor (DSP), a field-programmable gate array (FPGA), an application-specific integrated circuit (ASIC), and/or another type of processor. The processor is implemented in hardware, firmware, or a combination of hardware and software. In some implementations, controller 540 may include one or more processors that can be programmed to perform a function.

In some implementations, controller 540 may include a RAM, a ROM, and/or another type of dynamic or static storage device (e.g., a flash memory, a magnetic memory, an optical memory, etc.) that stores information and/or instructions for use by controller 540.

In some implementations, controller 540 may communicate with other devices, networks, and/or systems connected to device 500 to exchange information regarding network topology. Controller 540 may create routing tables based on the network topology information, may create forwarding tables based on the routing tables, and may forward the forwarding tables to input components 510 and/or output components 530. Input components 510 and/or output components 530 may use the forwarding tables to perform route lookups for incoming and/or outgoing packets.

Controller 540 may perform one or more processes described herein. Controller 540 may perform these processes in response to executing software instructions provided by a computer-readable medium (such as a computer readable storage medium and/or a computer readable transmission medium).

Software instructions may be read into a memory and/or storage component associated with controller 540 from another computer-readable medium or from another device via a communication interface. When executed, software instructions stored in a memory and/or storage component associated with controller 540 may cause controller 540 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 5 are provided as an example. In practice, device 500 may include additional components, fewer components, different components, or differently arranged components than those shown in Fig. 5. Additionally, or alternatively, a set of components (e.g., one or more components) of device 500 may perform one or more functions described as being performed by another set of components of device 500.

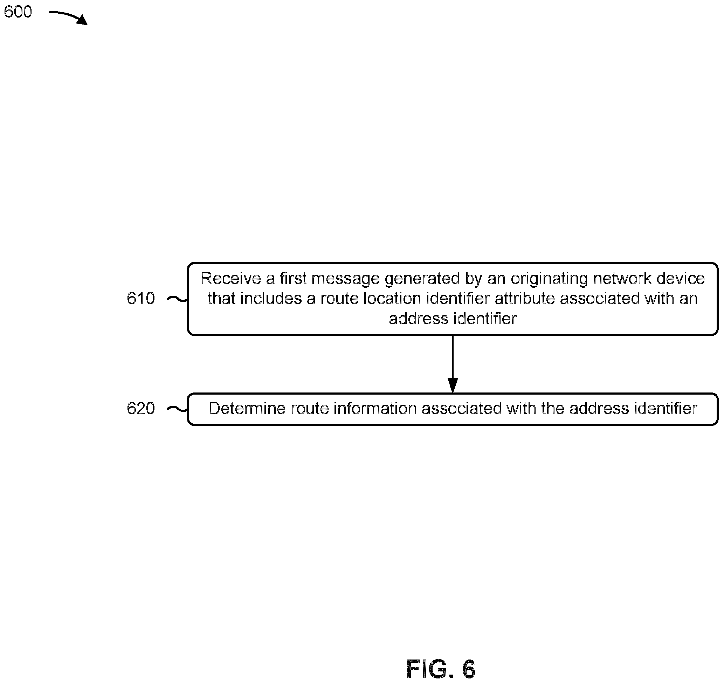

Fig. 6 is a flowchart of an example process 600 associated with dynamic multipath load balancing. In some implementations, one or more process blocks of Fig. 6 are performed by a first network device (e.g., a first network device 310). In some implementations, one or more process blocks of Fig. 6 are performed by another device or a group of devices separate from or including the first network device, such as one or more other network devices (e.g., one or more other network devices 310). Additionally, or alternatively, one or more process blocks of Fig. 6 may be performed by one or more components of device 400, such as processor 420, memory 430, input component 440, output component 450, and/or communication component 460; of device 500, such as input component 510, switching component 520, output component 530, and/or controller 540; and/or of another device.

As shown in Fig. 6, process 600 may include receiving a first message generated by an originating network device that includes a route location identifier attribute associated with an address identifier (block 610). For example, the first network device may receive a first message generated by an originating network device that includes a route location identifier attribute associated with an address identifier, as described above.

As further shown in Fig. 6, process 600 may include determining route information associated with the address identifier (block 620). For example, the first network device may determine, based on the route location identifier attribute, route information associated with the address identifier, as described above.

Process 600 may include additional implementations, such as any single implementation or any combination of implementations described below and/or in connection with one or more other processes described elsewhere herein.

In a first implementation, the first network device is directly connected to the originating network device via a local link, and wherein the route information indicates a path from the first network device to the originating network device via the local link.

In a second implementation, alone or in combination with the first implementation, process 600 includes updating a path number attribute of the first message, and sending the first message to a second network device.

In a third implementation, alone or in combination with one or more of the first and second implementations, the first network device is indirectly connected to the originating network device, and wherein the route information indicates local path quality information and remote path quality information associated with a path from the first network device to the originating network device.

In a fourth implementation, alone or in combination with one or more of the first through third implementations, wherein the local path quality information indicates a quality of a local path from the first network device to a second network device via a local link that connects the first network device and the second network device, and the remote path quality information indicates a quality of a remote path from the second network device to the originating network device via one or more other links that connect the second network device to the originating network device.

In a fifth implementation, alone or in combination with one or more of the first through fourth implementations, determining the route information comprises identifying, based on receiving the first message from a second network device via a local link that connects the first network device and the second network device, the local link, and determining, based on the local link and the route location identifier attribute, local path quality information and remote path quality information associated with a path from the first network device to the originating network device via the local link.

In a sixth implementation, alone or in combination with one or more of the first through fifth implementations, the first network device is directly connected to the originating network device via a local link, the method further comprising receiving, from the originating network device, a second message that includes the route location identifier attribute; and monitoring, based on receiving the second message, the local link.

In a seventh implementation, alone or in combination with one or more of the first through sixth implementations, process 600 includes sending, based on monitoring the local link and to a second network device, a third message that includes a path quality attribute associated with the local link.

In an eighth implementation, alone or in combination with one or more of the first through seventh implementations, the first network device is indirectly connected to the originating network device, and process 600 includes receiving, from a second network device, a second message that includes a path quality attribute associated with a path from the second network device to the originating network device, and updating, based on receiving the second message, remote path quality information indicated by the route information that is associated with the path.

In a ninth implementation, alone or in combination with one or more of the first through eighth implementations, the first network device is indirectly connected to the originating network device, and process 600 includes comprising identifying, based on the route information, local path quality information and remote path quality information associated with a path from the first network device to the originating network device; selecting, based on the local path quality information and the remote path quality information, a particular local link for forwarding traffic associated with the address identifier; and forwarding the traffic via the particular local link.

Although Fig. 6 shows example blocks of process 600, in some implementations, process 600 includes additional blocks, fewer blocks, different blocks, or differently arranged blocks than those depicted in Fig. 6. Additionally, or alternatively, two or more of the blocks of process 600 may be performed in parallel.

Therefore, from one perspective, there have been described approaches in which a first network device may receive a first message generated by an originating network device that includes a route location identifier attribute associated with an address identifier. The first network device may determine, based on the route location identifier attribute, route information associated with the address identifier.

Further examples of feature combinations taught by the present disclosure are set out in the following numbered clauses.

Clause 1. A method, comprising: receiving, by a first network device, a first message generated by an originating network device that includes a route location identifier attribute associated with an address identifier; and determining, by the first network device and based on the route location identifier attribute, route information associated with the address identifier.

Clause 2. The method of clause 1, wherein the first network device is directly connected to the originating network device via a local link, and wherein the route information indicates a path from the first network device to the originating network device via the local link.

Clause 3. The method of clause 1 or 2, further comprising: updating a path number attribute of the first message; and sending the first message to a second network device.

Clause 4. The method of clause 1, 2 or 3, wherein the first network device is indirectly connected to the originating network device, and wherein the route information indicates local path quality information and remote path quality information associated with a path from the first network device to the originating network device.

Clause 5. The method of clause 4, wherein: the local path quality information indicates a quality of a local path from the first network device to a second network device via a local link that connects the first network device and the second network device; and the remote path quality information indicates a quality of a remote path from the second network device to the originating network device via one or more other links that connect the second network device to the originating network device.

Clause 6. The method of any preceding clause, wherein determining the route information comprises: identifying, based on receiving the first message from a second network device via a local link that connects the first network device and the second network device, the local link; and determining, based on the local link and the route location identifier attribute, local path quality information and remote path quality information associated with a path from the first network device to the originating network device via the local link.

Clause 7. The method of any preceding clause, wherein the first network device is directly connected to the originating network device via a local link, the method further comprising: receiving, from the originating network device, a second message that includes the route location identifier attribute; and monitoring, based on receiving the second message, the local link.

Clause 8. The method of clause 7, further comprising: sending, based on monitoring the local link and to a second network device, a third message that includes a path quality attribute associated with the local link.

Clause 9. The method of any of clauses 1 to 6, wherein the first network device is indirectly connected to the originating network device, the method further comprising: receiving, from a second network device, a second message that includes a path quality attribute associated with a path from the second network device to the originating network device; and updating, based on receiving the second message, remote path quality information indicated by the route information that is associated with the path.

Clause 10. The method of any of clauses 1 to 6 or 9, wherein the first network device is indirectly connected to the originating network device, the method further comprising: identifying, based on the route information, local path quality information and remote path quality information associated with a path from the first network device to the originating network device; selecting, based on the local path quality information and the remote path quality information, a particular local link for forwarding traffic associated with the address identifier; and forwarding the traffic via the particular local link.

Clause 11. A computer-readable medium comprising a set of instructions, the set of instructions comprising: one or more instructions that, when executed by one or more processors of a first network device, cause the first network device to: receive a first message that includes a route location identifier attribute associated with an address identifier; and determine, based on the route location identifier attribute, route information associated with the address identifier.

Clause 12. The computer-readable medium of clause 11, wherein the route information indicates a path from the first network device to an originating network device associated with the address identifier via a local link.

Clause 13. The computer-readable medium of clause 11 or 12, wherein the route information indicates local path quality information and remote path quality information associated with a path from the first network device to an originating network device associated with the address identifier.

Clause 14. The computer-readable medium of clause 11, 12 or 12, wherein the one or more instructions, that cause the first network device to determine the route information, cause the first network device to: identify, based on receiving the first message, a local link; and determine, based on the local link and the route location identifier attribute, local path quality information and remote path quality information associated with a path from the first network device to an originating network device associated with the address identifier via the local link.

Clause 15. The computer-readable medium of any of clauses 11 to 14, wherein the one or more instructions further cause the first network device to: receive a second message that includes the route location identifier attribute; and monitor, based on receiving the second message, a local link that connects the first network device and an originating network device associated with the address identifier.

Clause 16. The computer-readable medium of clause 15, wherein the one or more instructions further cause the first network device to: send, based on monitoring the local link and to a second network device, a third message that includes a path quality attribute associated with the local link.

Clause 17. The computer-readable medium of any of clauses 11 to 16, wherein the one or more instructions further cause the first network device to: receive, from a second network device, a second message that includes a path quality attribute associated with a path from the second network device to an originating network device associated with the address identifier; and update, based on receiving the second message, the route information.

Clause 18. A first network device, comprising: one or more memories; and one or more processors to: receive a first message that includes a route location identifier attribute; and determine, based on the route location identifier attribute, route information for an address identifier associated with the route location identifier attribute.

Clause 19. The first network device of clause 18, wherein the one or more processors are further to: receive a second message that includes the route location identifier attribute; and monitor, based on receiving the second message, a local link.

Clause 20. The first network device of clause 18 or 19, wherein the one or more processors are further to: receive a second message that includes a path quality attribute; and update, based on receiving the second message, the route information.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, traffic or content may include a set of packets. A packet may refer to a communication structure for communicating information, such as a protocol data unit (PDU), a service data unit (SDU), a network packet, a datagram, a segment, a message, a block, a frame (e.g., an Ethernet frame), a portion of any of the above, and/or another type of formatted or unformatted unit of data capable of being transmitted via a network.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors to: perform X; perform Y; and perform Z," that claim should be interpreted to mean "one or more processors to perform X; one or more (possibly different) processors to perform Y; and one or more (also possibly different) processors to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method, comprising:
receiving, by a first network device, a first message generated by an originating network device that includes a route location identifier attribute associated with an address identifier; and
determining, by the first network device and based on the route location identifier attribute, route information associated with the address identifier.

2. The method of claim 1**,** wherein the first network device is directly connected to the originating network device via a local link, and
wherein the route information indicates a path from the first network device to the originating network device via the local link.

3. The method of claim 1 or 2, further comprising:
updating a path number attribute of the first message; and
sending the first message to a second network device.

4. The method of claim 1, 2 or 3, wherein the first network device is indirectly connected to the originating network device, and
wherein the route information indicates local path quality information and remote path quality information associated with a path from the first network device to the originating network device.

5. The method of claim 4, wherein:
the local path quality information indicates a quality of a local path from the first network device to a second network device via a local link that connects the first network device and the second network device; and
the remote path quality information indicates a quality of a remote path from the second network device to the originating network device via one or more other links that connect the second network device to the originating network device.

6. The method of any preceding claim, wherein determining the route information comprises:
identifying, based on receiving the first message from a second network device via a local link that connects the first network device and the second network device, the local link; and
determining, based on the local link and the route location identifier attribute, local path quality information and remote path quality information associated with a path from the first network device to the originating network device via the local link.

7. The method of any preceding claim, wherein the first network device is directly connected to the originating network device via a local link, the method further comprising:
receiving, from the originating network device, a second message that includes the route location identifier attribute; and
monitoring, based on receiving the second message, the local link.

8. The method of claim 7, further comprising:
sending, based on monitoring the local link and to a second network device, a third message that includes a path quality attribute associated with the local link.

9. The method of any of claims 1 to 6, wherein the first network device is indirectly connected to the originating network device, the method further comprising:
receiving, from a second network device, a second message that includes a path quality attribute associated with a path from the second network device to the originating network device; and
updating, based on receiving the second message, remote path quality information indicated by the route information that is associated with the path.

10. The method of any of claims 1 to 6 or 9, wherein the first network device is indirectly connected to the originating network device, the method further comprising:
identifying, based on the route information, local path quality information and remote path quality information associated with a path from the first network device to the originating network device;
selecting, based on the local path quality information and the remote path quality information, a particular local link for forwarding traffic associated with the address identifier; and
forwarding the traffic via the particular local link.

11. A computer-readable medium comprising a set of instructions, the set of instructions comprising one or more instructions that, when executed by one or more processors of a first network device, cause the first network device to carry out the method of any preceding claim.

12. A first network device, configured to:
receive a first message that includes a route location identifier attribute; and
determine, based on the route location identifier attribute, route information for an address identifier associated with the route location identifier attribute.

13. The first network device of claim 12, further configured to:
receive a second message that includes the route location identifier attribute; and
monitor, based on receiving the second message, a local link.

14. The first network device of claim 12 or 13, further configured to:
receive a second message that includes a path quality attribute; and
update, based on receiving the second message, the route information.
